# FASCICULE DE BREVET EUROPEEN

(11) **EP 1 964 249 B1**
(45) Date de publication et mention de la délivrance du brevet: **30.06.2010**
(21) Numéro de dépôt: 06847183.8
(22) Date de dépôt: 19.12.2006
(51) Int. Cl.: H02K 11/04

(54) **DISPOSITIF DE BORNE DE CONNEXION ELECTRIQUE NOTAMMENT DE MACHINE ELECTRIQUE TOURNANTE ET PROCEDE DE REALISATION D'UN TEL DISPOSITIF DE BORNE**
ELEKTRISCHE ANSCHLUSSENDGERÄTVORRICHTUNG, INSBESONDERE EINER ELEKTRISCHEN DREHMASCHINE UND HERSTELLUNGSVERFAHREN DAFÜR
ELECTRIC CONNECTION TERMINAL DEVICE IN PARTICULAR OF A ROTATING ELECTRICAL MACHINE AND METHOD FOR MAKING SAME

(30) Priorité: 23.12.2005 FR 0554074
(43) Date de publication de la demande: 03.09.2008
(73) Titulaire: VALEO EQUIPEMENTS ELECTRIQUES MOTEUR, 94046 Créteil Cedex (FR)
(72) Inventeur: FAKES, Michel, F-59113 Seclin (FR)
(74) Mandataire: Gamonal, Didier
(86) Numéro de dépôt international: PCT/FR2006/051393
(87) Numéro de publication internationale: WO 2007/074289

(56) Documents cités:
- WO-A-2004/040738
- DE-A1- 2 417 106
- DE-A1- 2 429 985
- FR-A- 2 327 642
- FR-A- 2 500 959

## Description

### Domaine de l'invention

L'invention concerne un dispositif de borne de connexion électrique, notamment du pont d'éléments de redressement du courant, tels que des diodes ou des transistors du type MOSFET, d'une machine électrique tournante, la borne étant Montée sur un organe support porteur des éléments de redressement du courant, et un procédé de réalisation d'un tel dispositif.

### Etat de la technique

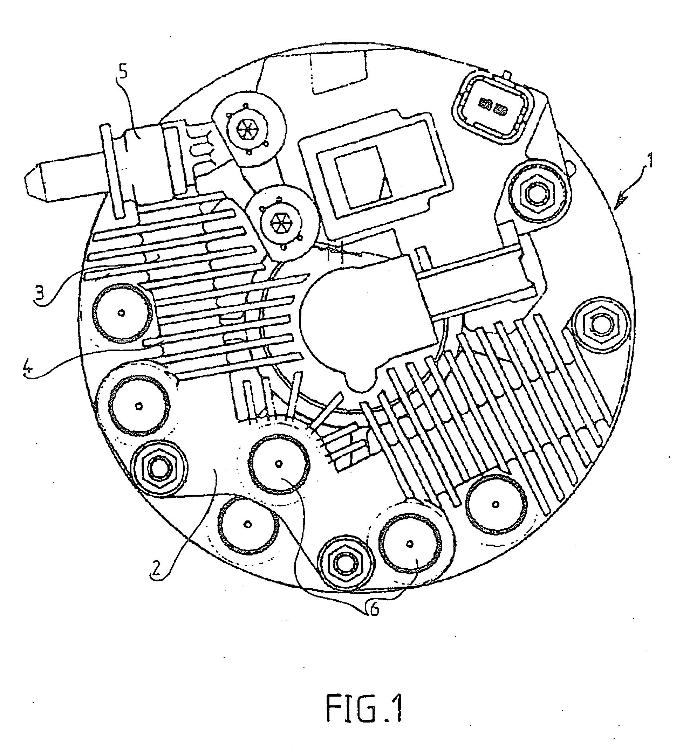

Dans les dispositifs de ce type, qui sont connus, la borne est placée dans le dissipateur du pont positif de manière axiale ou radiale, comme on le voit sur la figure 1 qui représente un palier arrière 1 de machine électrique tournante,tel qu'un alternateur, porteur d'un pont positif 2, c'est-à-dire porteur d'éléments de redressement du courant sous la forme de diodes positives, pourvu d'un dissipateur 3 à aiglettes de refroidissement 4 et sur lequel est fixée, via un surmoulage, la borne de polarité électrique positive 5 destinée à être reliée à la borne positive de la batterie. Les diodes 6 sont montées sur le dissipateur. Ces dispositifs présentent l'inconvénient qu'il faux changer de moule selon que l'on souhaite obtenir une borne axiale ou radiale.

Le document WO 2004/040738 divulgue un pont dissipateur comportant un caloduc et le document DE 24 17 106 divulgue un caloduc.

### Objet de l'invention

L'invention a pour but de pallier cet inconvénient qui vient d'être énoncé.

Pour atteindre ce but, le dispositif selon l'invention est **caractérisé en ce qu**'il comprend un caloduc disposé dans l'organe support et en ce que la borne est solidaire, notamment montée, sur un bouchon de fermeture du caloduc et en ce que le bouchon est variable en position de façon que l'orientation de la borne soit variable par variation de la position du bouchon.

Selon une autre caractéristique de l'invention, le dispositif est **caractérisé en ce que** le bouchon comporte une partie d'engagement dans l'extrémité du caloduc et une partie formant patte de montage de la borne.

Selon encore une autre caractéristique de l'invention, le dispositif est **caractérisé en ce que** la partie d'engagement du bouchon présente une forme cylindrique susceptible d'être emmanchée dans l'extrémité de forme complémentaire du caloduc, la position angulaire du bouchon étant variable par rotation de sa partie cylindrique.

Selon encore une autre caractéristique de l'invention le dispositif est **caractérisé en ce que** la partie de réception de la borne du bouchon est en forme d'une tige de réception d'une borne de forme annulaire, cette partie de réception pouvant être rectiligne ou coudée.

Selon encore une autre caractéristique de l'invention, le dispositif pour le pont d'éléments de redressement du courant, tel que des diodes ou des transistors du type MOSFET,s d'une machine électrique tournante, pourvu d'un dissipateur de chaleur constituant l'organe de support de la borne, est **caractérisé en ce que** le caloduc est inséré dans le dissipateur et le bouchon de support de la borne est variable en position de façon que la borne puisse constituer une borne dite orientation axiale ou radiale par variation de la position du bouchon.

Selon encore une autre caractéristique de l'invention, le dispositif est **caractérisé en ce que** le dissipateur est obtenu par surmoulage sur le caloduc, le bouchon de support de la borne pouvant être usiné en conséquence après le surmoulage.

La borne peut, si on le souhaite, être réalisée séparément du bouchon, puis être montée dessus.

En variante, la borne est réalisée d'un seul tenant avec le bouchon.

Le cas échéant, la borne peut être coudée.

Le procédé de réalisation d'un dispositif de connexion selon l'invention est **caractérisé en ce que** le caloduc est disposé dans le dissipateur par des moyens assurant un bon contact entre le caloduc et le dissipateur et en ce que le bouchon est monté sur le caloduc de façon que la borne puisse constituer une borne dite d'orientation radiale ou axiale selon la position du bouchon.

Selon une autre caractéristique de l'invention, le procédé est **caractérisé en ce que** le caloduc est inséré dans le dissipateur, à l'état vide, puis gonflé par mise sous pression pour qu'il se plaque sur les parois de l'orifice de réception du caloduc, pratiqué dans le dissipateur.

Selon encore une autre caractéristique de l'invention, le procédé est **caractérisé en ce que** le caloduc est inséré dans le dissipateur, à l'état rempli du fluide caloporteur et bouché.

Selon encore une autre caractéristique de l'invention, le procédé est **caractérisé en ce que** le dissipateur est réalisé par surmoulage autour du caloduc.

L'invention a encore pour objet une machine électrique tournante comportant un dispositif tel que précité.

### Description sommaire des dessins

L'invention sera mieux comprise et d'autres buts, détails et caractéristiques apparaîtront plus clairement dans la description explicative qui va suivre fai te en référence aux dessins schématiques annexés donnés uniquement à titre d'exemple illustrant un mode de réalisation de l'invention et dans lesquels :
- la figure 1 est une vue schématique du dessus d'un palier arrière d'une machine électrique tournante équipé d'un dissipateur de support des diodes positives classique ;
- la figure 2 est une vue de dessus schématique d'un palier arrière pourvu d'un dissipateur selon l'invention, dans lequel sont insérés deux caloducs ;
- la figure 3 est une vue schématique explosée illustrant un caloduc tel qu'indiqué sur la figure 2, pourvu d'un bouchon de support d'une borne de connexion, dans sa position de support d'une borne radiale ;
- la figure 4 est une vue similaire à la figure 3, mais montre le bouchon dans sa position de support d'une borne axiale ;
- les figures 5 et 6 sont des vues schématiques de deux autres versions de bouchon de support d'une borne de connexion, et
- la figure 7 est une vue schématique illustrant à titre d'exemple le maintien d'un caloduc pendant la phase de surmoulage de celui-ci.

### Description de l'invention

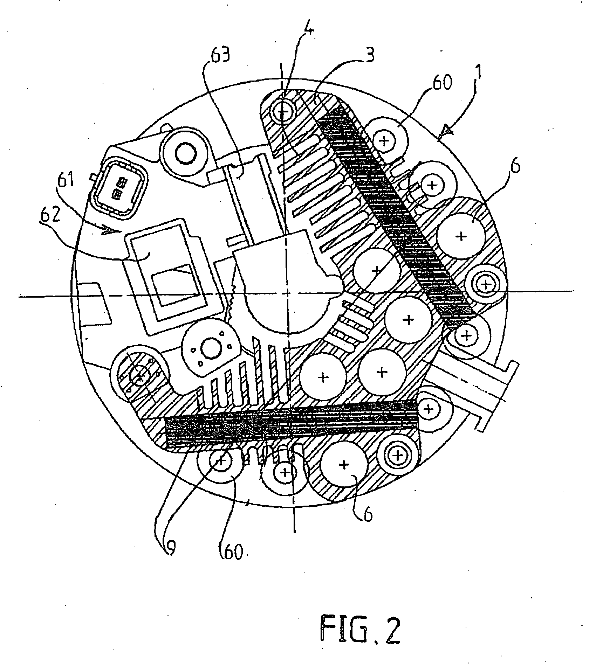

La figure 2 illustre un palier arrière d'une machine électrique tournante du même type que celui de la figure 1 mais configurée conformément à l'invention

Cette machine électrique tournante est par exemple un alternateur polyphasé notamment pour véhicule automobile. Cet alternateur comporte un carter de forme creuse comportant au moins un palier avant et un palier arrière. Ce carter est destiné à être monté sur une partie fixe.

A l'intérieur sont logés un stator entourant un rotor solidaire d'un arbre monté à rotation dans le carter à l'aide de roulements, tels que des roulements à billes, portés centralement respectivement par le palier arrière et le palier avant.

Le stator comporte un corps de stator rainuré portant un bobinage de stator comprenant des enroulements dont le nombre varie en fonction notamment du nombre de phases que comporte l'alternateur. Le corps du stator est porté par le carter en étant implanté à la périphérie externe de celui-ci. Ce corps consiste par exemple en un paquet de tôles.

Un entrefer existe entre la périphérie interne du corps du stator et la périphérie externe du rotor.

Le rotor est par exemple un rotor à griffes ou un rotor à pôles saillants.

L'arbre traverse centralement le rotor en étant lié en rotation à celui-ci par exemple par emmanchement à force, l'arbre comportant à cet effet aux moins une portion à reliefs emmanchée à force dans l'ouverture centrale que comporte le rotor pour ce faire.

L'extrémité avant de l'arbre traverse le palier avant et porte un organe d'entraînement, tel qu'une poulie ou une roue dentée, appartenant à un dispositif de transmission de mouvement, par exemple à courroie(s) ou chaîne(s), intervenant entre l'arbre de l'alternateur et le vilebrequin du moteur thermique du véhicule automobile.

Le rotor comporte un corps de rotor, de préférence en matériau ferromagnétique. Au moins un bobinage d'excitation est associé au corps. Lorsque le bobinage d'excitation est alimenté électriquement, le corps du rotor est aimanté avec formation de pôles magnétiques, le corps du rotor étant configuré en conséquence.

Il se produit alors, lorsque l'arbre tourne, un courant induit dans le bobinage du stator.

Ce courant induit est du type alternatif en sorte qu'il est prévu un dispositif de redressement du coursant comprenant des éléments de redressement du courant, tel qu'un pont de diodes ou un pont de transistors du type MOSFET, pour transformer le courant alternatif en un courant continu afin d'alimenter électriquement au moins une charge, telle qu'une charge appartenant au réseau de bord du véhicule et/ou une batterie.

Le dispositif de redressement de courant est doté de plusieurs branches et est le plus souvent porté par le palier arrière de la machine électrique tournante. Ce dispositif comporte un dissipateur positif monté à isolation électrique sur le palier arrière et portant des éléments positifs de redressement du courant, par exemple des diodes positives, un dissipateur négatif portant des éléments négatifs de redressement du courant, tel que des diodes négatives, et un connecteur en matériau électriquement isolant portant des liaisons électriques pour relier électriquement entre eux les éléments de redressement du courant afin de former des branches du dispositif de redressement, tel qu'un pont de diodes, et de relier électriquement les sorties des enroulements, connectées par exemple en étoile ou en triangle, du bobinage du stator au dispositif de redressement.

Le dissipateur négatif est relié électriquement à la masse, tandis que le dissipateur positif porte une borne de sortie, dite borne B+ destinée à être reliée à la borne positive d'une batterie.

Ces dissipateurs sont dans un mode de réalisation métalliques. Avantageusement le dissipateur négatif est constitué par le fond palier arrière de forme creuse.

Le bobinage d'excitation du rotor est relié électriquement à un régulateur de tension pour limiter la tension produite par l'alternateur et protéger les charges.

Des balais sont destinés à frotter sur les bagues collectrices. Ces balais sont montés dans un porte-balais appartenant le plus souvent à un ensemble régulateur porte-balais porté également par le palier arrière.

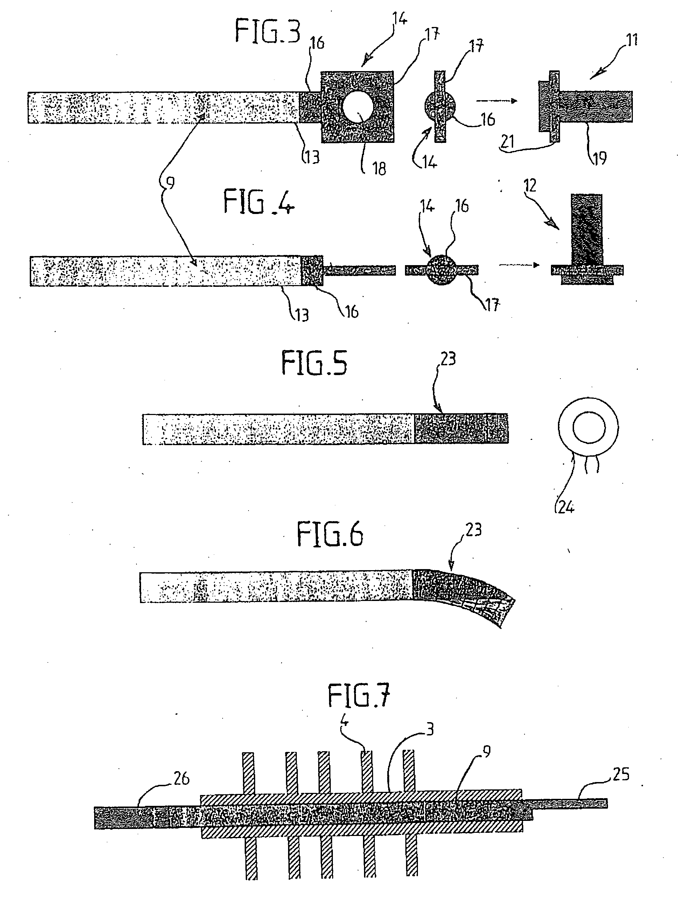

A titre d'exemple on se reportera au document WO 02/29958 divulguant, dans le cadre d'un alternateur à balais et à dispositif de redressement sous la forme d'un pont de diodes,une telle disposition mieux visible dans les figures 7 et 14 à 17 de ce document.

Dans ce document .la machine est refroidie par circulation d'air à l'aide d'au moins un ventilateur solidaire d'une des extrémités du rotor, les paliers du carter étant dotés d'ouverture de passage d'air à cet effet.

Le palier arrière porte le dispositif de redressement du courant et l'ensemble régulateur de tension porte-balais. Cet ensemble et le dispositif de redressement sont coiffés par un capot de protection solidaire du capot.

Dans ce document, comme dans la figure 2, le dispositif de redressement du courant est un pont de diodes comportant un dissipateur positif portant les diodes positives. L'ensemble dissipateur-diodes positives sera appelé pont positif.

Dans cette figure 2, comme à la figure 1, on a retiré le capot pour mieux voir les caloducs 9 selon l'invention.

Ainsi dans cette figure on voit en 1 le palier arrière portant à isolation électrique le dissipateur positif 3 sur lequel sont montées, par exemple par emmanchement à force les diodes positives 6, les références 60 désignant des diodes négatives portées de manière précitée par le fond du palier arrière 1, tandis que la référence 61 désigne l'ensemble régulateur de tension 62, porte-balais 63.

Dans cette figure il est prévu deux caloducs désignés par la référence 9 et insérés dans le dissipateur 3 du pont positif 2. Ce pont ayant la forme générale d'un V, chacun des deux caloducs 9 s'étend dans une branche du V, comme le montre clairement la figure. Les bouchons des caloducs et des bornes des connexions ne sont pas montrés sur cette figure.

Bien entendu en variante un seul caloduc est prévu.

Les figures 3 et 4 illustrent de quelle manière les bornes radiale 11 et axiale 12, destinées a être reliées à la borne positive de la batterie, peuvent être montés sur un dissipateur de pont positif, non pas directement comme dans l'état de la technique illustré par la figure 1, mais sur le bouchon 14 d'un caloduc 9 inséré dans le dissipateur. Etant donné que la structure générale et le fonctionnement des caloducs sont connus, il n'est pas nécessaire de décrire plus en détail les caloducs tels qu'utilisés dans le cadre de l'invention. Il suffit d'indiquer qu'il s'agit d'organes en forme de tubes fermés à leurs deux extrémités, la fermeture de l'extrémité extérieure 13, près de la périphérie du palier étant fermée par un bouchon 14 configuré en organes de support d'une borne de connexion électrique radiale 11 ou axiale 12.

Pour mémoire on rappellera qu'un caloduc comporte une moins une zone d'évaporation reliée à une source chaude, ici le dissipateur 3 à diodes 6, et une zone de condensation reliée à une source froide, le liquide caloporteur contenu dans l'enceinte du caloduc changeant d'état entre ces deux zones.

Ici la source froide est constituée par les bornes 11 et 12 destinées à être reliées par un câble à la borne positive de la batterie. Ce câble évacue les calories.

Comme on le voit sur les figures, un bouchon 14 du caloduc comporte une partie cylindrique 16 destinée à être emmanchée dans l'extrémité 13 du caloduc 9 et une partie, dans le cas de l'exemple en forme d'une patte rectangulaire 17, de support d'une borne de connexion 11 ou 12. La patte 17 est percée dans son centre par un orifice 18 de passage de la tige cylindrique 19 de la borne 11 ou 12, se terminant par un épaulement 21 de butée destiné à venir en appui sur la patte 14 lorsque la borne est dans sa position assemblée.

L'orifice 18 est dans un mode de réalisation taraudé et la tige filetée, la borne se montant par vissage sur le bouchon 14.

D'autres modes de montage sont envisageables, tel qu'un rivetage.

En raison de sa partie de bouchon cylindrique 16 le bouchon peut être emmanché dans l'extrémité 13 du caloduc dans des positions angulaires différentes. La figure 3 illustre le bouchon dans une position dans laquelle sa patte 17 est orientée de telle façon que la borne puisse s'étendre dans une direction nommée communément position radiale. La figure 4 montre le bouchon 14 et sa patte 17 dans une position angulairement décalée de 90° par rapport à la figure 3 de façon que la borne notée 12 puisse être montée dans une position appelée position axiale. C'est en raison de leur orientation différente que les bornes 11 et 12 sont ainsi nommées borne radiale et borne axiale.

Les figures 5 et 6 illustrent deux autres possibilités de réalisation de bouchons de support de borne. Ces bouchons maintenant de forme cylindrique sur toute leur longueur et désignés par la référence 23 permettent de recevoir des bornes de forme annulaire 24. Le bouchon 23 peut être rectiligne selon la figure 5 ou coudé d'un angle prédéterminé, conformément à la figure 6.

Concernant la mise en place du caloduc 9 dans le dissipateur, il pourrait être simplement emmanché dans un canal prévu à cette fin dans le dissipateur. Mais d'autres solutions de montage pourraient être envisagées pour éviter le risque d'un mauvais contact entre le dissipateur et le caloduc suite à l'emmanchement, ce qui pourrait introduire des résistances thermiques. Une solution consiste à insérer le caloduc vide dans le dissipateur, puis gonfler le caloduc par mise sous pression, de façon qu'il se plaque correctement sur la paroi du canal du dissipateur. Le caloduc est ensuite rempli du fluide caloporteur, puis rebouché. Selon une autre solution, on pourrait surmouler l'aluminium du dissipateur autour du caloduc, solution qui est illustrée sur la figure 7. Cette solution procure un contact parfait entre le caloduc et le dissipateur. Le caloduc peut être maintenu pendant la phase de moulage.

Si le caloduc est déjà rempli de son fluide et bouché, il est possible de prévoir des bouchons plus longs qui pourraient ensuite être usinés après la phase de moulage comme le bouchon 25 à droite sur la figure 7. Si le caloduc n'est pas rempli pendant le moulage, on peut prévoir que l'un des deux bouchons, c'est-à-dire le bouchon indiqué en 26 à gauche de la figure 7, soit provisoire, mais l'autre bouchon, à droite et noté 25 soit définitif et usiné par la suite comme décrit ci-avant. Une fois le moulage réalisé, le bouchon provisoire 26 est retiré et le caloduc est rempli de fluide. Puis rebouché avec un bouchon définitif.

Selon d'autres possibilités de montage du caloduc dans le dissipateur, on peut fretter le caloduc dans ce dernier ou le coller dans le dissipateur ou encore braser le caloduc dans celui-ci.

Il est à noter que le principe de l'invention, qui consiste à utiliser un bouchon de fermeture d'un caloduc comme organe de support d'une borne électrique de connexion peut être utilisé dans tous les cas où la problématique correspond à celle qui vient d'être exposée en décrivant l'invention dans son application au dissipateur d'un pont positif. L'avantage essentiel de l'invention réside dans le fait qu'il n'est plus nécessaire d'utiliser deux moules selon que l'on souhaite réaliser une borne axiale ou radiale.

Bien entendu la présente invention n'est pas limitée aux exemples de réalisation décrits.

Ainsi la machine électrique tournante est en variante un alterno-démarreur, c'est à dire un alternateur réversible permettant de transformer également de l'énergie électrique en énergie mécanique notamment pour démarrer le moteur à combustion interne du véhicule automobile. Dans ce cas le dispositif de redressement de courant comporte de manière avantageuse des transistors du type MOSFET et peut être, dans un mode de réalisation monté sur le palier arrière, tandis que le régulateur de tension est monté dans un boîtier externe de la machine avec intervention de câbles entre le boîtier et la machine comme décrit dans le document FR A 2 745 445 auquel on se reportera.

Ainsi le porte-balais peut être distinct du régulateur de tension.

L'invention permet de bien évacuer la chaleur et de standardiser la machine par changement du bouchon selon l'orientation souhaitée de la borne.

Dans un exemple de mise en oeuvre de l'invention non illustré, le bouchon 14 peut définir un élément de contact électrique sur lequel est raccordée une phase électrique de la machine.

Dans ce cas, le bouchon 14 peut comporter des pattes permettant ce raccordement électrique.

La borne au sens de l'invention doit s'entendre comme pouvant être formée par l'élément de contact précité.

## Revendications

1. Dispositif de borne de connexion électrique, notamment du pont d'éléments de redressement du courant, tels que des diodes ou des transistors du type MOSFET, d'une machine électrique tournante, la borne étant montée sur un organe support tel qu'un dissipateur de chaleur, porteur des éléments de redressement du courant, **caractérisé en ce qu'**il comprend un caloduc (9) disposé dans l'organe de support (3), **en ce que** la borne (11, 12, 24) est portée, notamment montée, sur un bouchon (14, 23) de fermeture du caloduc (9) et **en ce que** le bouchon (14) de support de la borne (11, 12) est monté sur l'extrémité (13) du caloduc (9), variable en position, de façon que l'orientation de la borne (11, 12) soit variable par variation de la position du bouchon.

2. Dispositif selon la revendication 1, **caractérisé en ce que** le bouchon (14) comporte une partie (16) d'engagement dans l'extrémité (13) du caloduc et une partie (17) formant patte de montage de la borne (11, 12).

3. Dispositif selon la revendication 2, **caractérisé en ce que** la partie d'engagement (16) du bouchon présente une forme cylindrique susceptible d'être emmanchée dans l'extrémité (13) de forme complémentaire du caloduc, la position angulaire du bouchon étant variable par rotation de sa partie cylindrique (16).

4. Dispositif selon la revendication 1, **caractérisé en ce que** la partie de réception de la borne du bouchon (23) est en forme d'une tige de réception d'une borne (24) de forme annulaire, cette partie de réception pouvant être rectiligne ou coudée.

5. Dispositif selon l'une des revendication 1 à 4, pour le pont de diodes ou de transistors du type MOSFET d'une machine électrique tournante, pourvu d'un dissipateur de chaleur constituant l'organe de support de la borne, **caractérisé en ce que** le caloduc (9) est inséré dans le dissipateur (3) et le bouchon (14, 23) de support de la borne (11, 12, 24) est variable en position de façon que la borne puisse constituer une borne dite orientation axiale ou radiale par variation de la position du bouchon.

6. Dispositif selon la revendication 5, **caractérisé en ce que** le dissipateur (3) est obtenu par surmoulage sur le caloduc (9), le bouchon de support (14) de la borne (11, 12) pouvant être usiné en conséquence après le surmoulage.

7. Procédé de réalisation d'un dispositif de connexion selon l'une des revendications 5 ou 6, **caractérisé en ce que** le caloduc (9) est disposé dans le dissipateur (3) par des moyens assurant un bon contact entre le caloduc et le dissipateur et **en ce que** le bouchon (14, 23) est monté sur le caloduc (9) de façon que la borne puisse constituer une borne dite orientation axiale ou radiale par variation de la position du bouchon.

8. Procédé selon la revendication 7, **caractérisé en ce que** le caloduc (9) est inséré dans le dissipateur (3), à l'état vide, puis gonflé par mise sous pression pour qu'il se plaque sur les parois du canal de réception du caloduc, pratiqué dans le dissipateur.

9. Procédé selon la revendication 7, **caractérisé en ce que** le caloduc (9) est inséré dans le dissipateur (3), à l'état rempli du fluide caloporteur et bouché.

10. Procédé selon la revendication 7, **caractérisé en ce que** le dissipateur (3) est réalisé par surmoulage autour du caloduc (9).

11. Machine électrique tournante, notamment un alternateur, comportant un dispositif selon l'une quelconque des revendications 1 à 6.

12. Machine électrique tournante selon la revendication 11, **caractérisée en ce qu'**elle consiste en un alternateur ou en un alterno-démarreur comportant une borne (12, 24) de polarité positive portée par le bouchon (14, 23) de fermeture du caloduc (9) et destinée à être reliée à la borne positive d'une batterie via un câble.

## Claims

1. Electrical connection terminal device, in particular of the bridge of current rectifier elements, such as diodes or transistors of the MOSFET type, of a rotary electric machine, the terminal being fitted on a support unit such as a heat dissipater which bears current rectifier elements, **characterised in that** it comprises a heat pipe (9) which is disposed in the support unit (3), **in that** the terminal (11, 12, 24) is supported, and in particular is fitted, on a stopper (14, 23) for closure of the heat pipe (9), and **in that** the stopper (14) which supports the terminal (11, 12) is fitted on the end (13) of the heat pipe (9) with a variable position, such that the orientation of the terminal (11, 12) can be varied by varying the position of the stopper.

2. Device according to claim 1, **characterised in that** the stopper (14) comprises a part (16) for engagement in the end (13) of the heat pipe, and a part (17) which forms a lug for fitting of the terminal (11, 12).

3. Device according to claim 2, **characterised in that** the part (16) for engagement of the stopper has a cylindrical form which can be fitted into the end (13) with a complementary shape of the heat pipe, the angular position of the stopper being variable by rotation of its cylindrical part (16).

4. Device according to claim 1, **characterised in that** the part for receipt of the terminal of the stopper (23) is in the form of a rod for receipt of a terminal (24) with an annular form, this receipt part being able to be straight or bent.

5. Device according to one of claims 1 to 4, for the bridge of diodes or transistors of the MOSFET type of a rotary electric machine, provided with a heat dissipater which constitutes the support unit of the terminal, **characterised in that** the heat pipe (9) is inserted in the dissipater (3), and the position of the stopper (14, 23) for support of the terminal (11, 12, 24) is variable, such that the terminal can constitute a terminal with so-called axial or radial orientation, by variation of the position of the stopper.

6. Device according to claim 5, **characterised in that** the dissipater (3) is obtained by over-moulding onto the heat pipe (9), the stopper (14) for support of the terminal (11, 12) consequently being able to be machined after the over-moulding has taken place.

7. Method for production of a connection device according to one of claims 5 or 6, **characterised in that** the heat pipe (9) is disposed in the dissipater (3) by means which assure good contact between the heat pipe and the dissipater, and **in that** the stopper (14, 23) is fitted on the heat pipe (9) such that the terminal can constitute a terminal with so-called axial or radial orientation, by variation of the position of the stopper.

8. Method according to claim 7, **characterised in that** the heat pipe (9) is inserted in the dissipater (3) in the empty condition, and is then inflated by being put under pressure so that it is placed on the walls of the channel which is provided in the dissipater for receipt of the heat pipe.

9. Method according to claim 7, **characterised in that** the heat pipe (9) is inserted in the dissipater (3) in the condition in which it is filled with the heat-conveying fluid, and is stopped up.

10. Method according to claim 7, **characterised in that** the dissipater (3) is produced by over-moulding around the heat pipe (9).

11. Rotary electric machine, in particular an alternator, comprising a device according to any one of claims 1 to 6.

12. Rotary electric machine according to claim 11, **characterised in that** it consists of an alternator or an alternator-starter, comprising a terminal (12, 24) with positive polarity which is supported by the stopper (14, 23) for closure of the heat pipe (9), and is designed to be connected to the positive terminal of a battery via a cable.

## Patentansprüche

1. Elektrische Anschlussklemmenvorrichtung, insbesondere für die Brücke aus Stromgleichrichterelementen, etwa Dioden oder MOSFET-Transistoren, einer rotierenden elektrischen Maschine, wobei die Klemme auf einem Trägerorgan, etwa einem Kühlkörper, angebracht ist, das als Träger der Stromgleichrichterelemente dient, **dadurch gekennzeichnet, dass** sie ein Wärmerohr (9) umfasst, das im Trägerorgan (3) angeordnet ist, dass die Klemme (11, 12, 24) auf einem Verschluss (14, 23) des Wärmerohrs (9) angeordnet, insbesondere angebracht, ist und dass der die Klemme (11, 12) tragende Verschluss (14) positionsvreränderlich am Ende (13) des Wärmerohrs (9) angebracht ist, so dass die Ausrichtung der Klemme (11, 12) durch Veränderung der Position des Verschlusses veränderlich ist.

2. Vorrichtung nach Anspruch 1, **dadurch gekennzeichnet, dass** der Verschluss (14) einen Teil (16) zum Einsetzen in das Ende (13) des Wärmerohrs und einen als Ansatz für die Anbringung der Klemme (11, 12) dienenden Teil (17) umfasst.

3. Vorrichtung nach Anspruch 12, **dadurch gekennzeichnet, dass** der Einsetzteil (16) des Verschlusses eine zylindrische Form aufweist, die in das mit entsprechender Form ausgeführte Ende (13) des Wärmerohrs eingepasst werden kann, wobei die Winkelposition des Verschlusses durch Drehung seines zylindrischen Teils (16) veränderlich ist.

4. Vorrichtung nach Anspruch 1, **dadurch gekennzeichnet, dass** der Klemmenaufnahmeteil des Verschlusses (23) in Form eines Aufnahmestifts für die Aufnahme einer ringförmigen Klemme (24) ausgeführt ist, wobei dieser Aufnahmeteil geradlinig oder gebogen sein kann.

5. Vorrichtung nach einem der Anspruche 1 bis 4 für die Brücke aus Dioden oder MOSFET-Transistoren einer rotierenden elektrischen Maschine mit einem das Trägerorgan der Klemme bildenden Kühlkörper, **dadurch gekennzeichnet, dass** das Wärmerohr (9) in den Kühlkörper (3) eingefügt und der die Klemme (11, 12, 24) tragende Verschluss (14, 23) positionsveränderlich ist, so dass die Klemme durch Veränderung der Position des Verschlusses eine sogenannte Klemme mit axialer oder radialer Ausrichtung bilden kann.

6. Vorrichtung nach Anspruch 5, **dadurch gekennzeichnet, dass** der Kühlkörper (3) durch Aufformen auf dem Wärmerohr (9) hergestellt wird wobei der die Klemme (11, 12) tragende Verschluss (14) nach dem Aufformen entsprechend bearbeitet werden kann.

7. Verfahren zur Herstellung einer Anschlussvorrichtung nach einem der Anspruche 5 oder 6, **dadurch gekennzeichnet, dass** das Wärmerohr (9) im Kühlkörper (3) anhand von Mitteln angeordnet wird, die einen einwandfreien Kontakt zwischen dem Wärmerohr und dem Kühlkörper sicherstellen, und dass der Verschluss (14. 23) so am Wärmerohr (9) angebracht wird, dass die Klemme durch Veränderung der Position des Verschlusses eine sogenannte Klemme mit axialer oder radialer Ausrichtung bilden kann.

8. Verfahren nach Anspruch 7, **dadurch gekennzeichnet, dass** das Wärmerohr (9) im Leerzustand in den Kühlkörper (3) eingefügt und anschießend durch Druckbeaufschlagung aufgehoben wird, so dass es sich an die Wände des in den Kühlkörper eingearbeiteten Aufnahmekanals für das Wärmerohr anpresst.

9. Verfahren nach Anspruch 7, **dadurch gekennzeichnet, dass** das Wärmerohr (9) im mit dem Wärmeträgermedium befüllten und verschlossenen Zustand in den Kühlkörper (3) eingefügt wird.

10. Vorrichtung nach Anspruch 7, **dadurch gekennzeichhnet, dass** der Kühlkörper (3) durch Aufformen um das Wärmerohr (9) herum ausgeführt wird.

11. Rotierende elektrische Maschine, insbesondere ein Wechseistromgenerator, umfassend eine Vorrichtung nach einem der Anspruche 1 bis 6.

12. Rotierende elektrische Maschine nach Anspruch 11, **dadurch gekennzeichnet, dass** sie aus einem Wechselstromgenerator oder Anlassergenerator besteht, der eine Klemme (12, 24) mit positiver Polarität umfasst, die am Verschluss (14, 23) des Wärmerohrs (9) angeordnet und dazu bestimmt ist, über ein Kabel mit der Plusklemme einer Batterie verbunden zu werden.
